# EUROPEAN PATENT APPLICATION

(11) **EP 4 738 810 A1**
(43) Date of publication of application: **06.05.2026**
(21) Application number: 24830760.5
(22) Date of filing: 25.06.2024
(51) Int. Cl.: H04N 5/64

(54) **VIDEO PROCESSING METHOD AND APPARATUS, DEVICE, COMPUTER READABLE STORAGE MEDIUM, AND PRODUCT**

(30) Priority: 27.06.2023 CN 202310770257
(71) Applicant: Beijing Zitiao Network Technology Co., Ltd., Beijing 100190 (CN)
(72) Inventor: WANG, Jing, Beijing 100028 (CN); LI, Jian, Beijing 100028 (CN); XU, Wang, Beijing 100028 (CN); XU, Yitian, Beijing 100028 (CN)
(74) Representative: Isarpatent
(86) International application number: PCT/CN2024/101342
(87) International publication number: WO 2025/002120

(57) **Abstract**

Embodiments of the disclosure provide a method, an apparatus, a device, a computer readable storage medium and a product for video processing. The method includes: displaying, in a video editing interface, a content associated with a video to be processed and a predetermined camera movement processing control, where the associated content includes a video track corresponding to the video to be processed, and any video frame; determining at least one target camera movement template generated by a user, in response to a trigger operation by the user based on the camera movement processing control, the target camera movement template including a motion parameter associated with a camera movement operation; and performing, based on the at least one target camera movement template, video processing on the video to be processed to obtain a target video. The user does not need to manually control the operation of camera movement, pause, rotation and the like in a capturing process. The difficulty of camera movement processing is reduced, and displayed contents and interaction modes withinin the video editing interface are enriched.

## Description

This application claims the priority of Chinese Patent Application No. 202310770257.4, entitled "METHOD, APPARATUS, DEVICE, COMPUTER READABLE STORAGE MEDIUM AND PRODUCT FOR VIDEO PROCESSING," filed June 27, 2023, the entire contents of which are incorporated herein by reference.

### FIELD

The embodiments of the disclosure relate to the technical field of interface interaction, in particular to a method, an apparatus, a device, a computer readable storage medium and a product for video processing.

### BACKGROUND

Camera movement, that is, a moving camera, mainly refers to a means of capturing a video through movement of the camera itself. In order to optimize a display effect of film and television works, a moving camera is used to capture a content in most of the film and television works.

With development of networks, more and more applications on the Internet provide users with the functions of uploading and posting original videos. In order to improve video quality of the posted video and achieve a display effect of the camera movement, the user is usually required to perform operations such as rotation, movement and the like on the camera. The operations are often cumbersome and difficulty of the operations is high, resulting in poor user experience.

### SUMMARY

The embodiments of the disclosure provide a method, an apparatus, a device, a computer readable storage medium and a product for video processing, which are used for solving the technical problem that a manual camera movement operation is cumbersome and difficult in a process of video generating.

According to a first aspect, an embodiment of the present disclosure provides a method of processing a video, comprising: displaying, in a video editing interface, a content associated with a video to be processed and a predetermined camera movement processing control, where the associated content comprises a video track corresponding to the video to be processed, and any video frame; determining at least one target camera movement template generated by a user, in response to a trigger operation by the user based on the camera movement processing control, the target camera movement template comprising a motion parameter associated with a camera movement operation; and performing, based on the at least one target camera movement template, video processing on the video to be processed to obtain a target video.

According to a second aspect, an embodiment of the present disclosure provides an apparatus for processing a video, comprising: a display module configured to display, in a video editing interface, a content associated with a video to be processed and a predetermined camera movement processing control, where the associated content comprises a video track corresponding to the video to be processed, and any video frame; a determining module configured to determine at least one target camera movement template generated by a user, in response to a trigger operation by the user based on the camera movement processing control, the target camera movement template comprising a motion parameter associated with a camera movement operation; a processing module configured to perform, based on the at least one target camera movement template, video processing on the video to be processed to obtain a target video.

According to a third aspect, an embodiment of the present disclosure provides an electronic device, comprising: a processor and a memory. The memory stores computer executable instructions. The processor executes the computer executable instructions stored by the memory, to cause the at least one processor to perform the method of processing a video of the above first aspect and various possible design of the first aspect.

According to a fourth aspect, an embodiment of the present disclosure provides a computer readable storage medium storing computer executable instruction. The computer executable instructions, when executed by a processor, implements the method of processing a video of the above first aspect and various possible design of the first aspect.

According to a fifth aspect, an embodiment of the present disclosure provides a computer program product, comprising a computer program. The computing program, when executed by a processor, implements the method of processing a video of the above first aspect and various possible designs of the first aspect.

### BRIEF DESCRIPTION OF DRAWINGS

In order to more clearly illustrate the embodiments of the present disclosure or the technical solutions in the related art, the accompanying drawings need to be used in the description of the embodiments or the related art will be briefly introduced below. It will be apparent that the drawings in the following description are some embodiments of the present disclosure. For those skilled in the art, other drawings may also be obtained according to these drawings without making creative effort.
FIG. 1 is a schematic flowchart of a method of video processing provided by an embodiment of the present disclosure;
FIG. 2 is a schematic flowchart of a method of video processing provided by another embodiment of the present disclosure;
FIG. 3 is a schematic diagram of interface interaction provided by an embodiment of the present disclosure;
FIG. 4 is a schematic diagram of another interface interaction provided by an embodiment of the present disclosure;
FIG. 5 is a schematic diagram of still another interface interaction provided by an embodiment of the present disclosure;
FIG. 6 is a schematic flowchart of a method of video processing provided by still another embodiment of the present disclosure;
FIG. 7 is a schematic diagram of yet another interface interaction provided by an embodiment of the present disclosure;
FIG. 8 is a schematic structural diagram of an apparatus for video processing provided by an embodiment of the present disclosure;
FIG. 9 is a schematic diagram of a structure of an electronic device provided by an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts fall within the scope of the present disclosure.

It can be understood that, before the technical solutions disclosed in the embodiments of the present disclosure are used, the types, the usage scope, the usage scenario and the like of personal information involved in the present disclosure should be notified to the user in an appropriate manner according to the relevant laws and regulations to obtain the authorization of the user.

For example, in response to receiving an active request from a user, prompt information is sent to the user to explicitly prompt the user that the requested operation will need to obtain and use the personal information of the user. Therefore, the user can autonomously select whether to provide personal information to software or hardware (such as electronic device, application program, server, and storage medium) executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text in the pop-up window. In addition, the pop-up window may further carry a selection control for the user to select "agree" or "not agree" to provide personal information to the electronic device.

It may be understood that the foregoing process of notification and obtaining a user authorization is merely illustrative, and does not constitute a limitation on implementations of the present disclosure, and other manners of meeting related laws and regulations may also be applied to implementations of the present disclosure.

In order to solve the technical problem that the manual camera movement operation is cumbersome and difficult in the process of video generating. The disclosure provides a method, an apparatus, a device, a computer readable storage medium and a product for video processing.

It should be noted that the method, the apparatus, the device, the computer readable storage medium and the product for video processing provided in the present disclosure may be applied in any application scenario of video processing.

In the related art, in order to present the camera movement effect in the captured video, it is generally needed to rotate, toss, push, pull, and pause the camera at a fixed point. That is, the user needs to follow the rhythm of the music to take actions such as rotating the camera, tossing the camera, pushing the camera, pulling the camera, and pausing the camera. The operations are often cumbersome, difficulty of capturing is high, and high professional skills are required for users.

In the process of solving the above technical problem, the inventors find that in order to simplify the operation difficulty of the camera movement and improve the efficiency of camera movement processing, different types of camera movement templates may be set in advance. In some embodiments, the camera movement template may include a camera movement parameter, and the camera movement parameter includes, but is not limited to, a trajectory parameter, a motion mode parameter, a motion duration parameter, a motion dimension parameter, and the like.

Further, after obtaining a video to be processed, a camera movement processing control may be displayed in a video editing interface. Therefore, the user can select a camera movement category based on the camera movement processing control, and then a key frame in the video to be processed may be processed based on the at least one camera movement template corresponding to the camera movement category selected by the user, so as to achieve the camera movement effect.

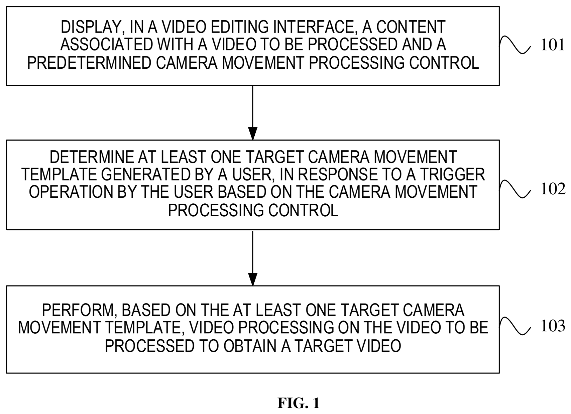

FIG. 1 is a schematic flowchart of a method of video processing provided by an embodiment of the present disclosure. As shown in FIG. 1, the method comprises:
Step 101: a content associated with a video to be processed and a predetermined camera movement processing control is displayed in a video editing interface, where the associated content comprises a video track corresponding to the video to be processed, and any video frame.

The execution entity of this embodiment is an apparatus for video processing, and the apparatus for video processing may be coupled to a terminal device, to perform camera movement processing on a video to be processed based on a trigger operation by the user on the terminal device, to obtain a target video. Alternatively, the apparatus for processing a video may be coupled to a server. The server can be communicatively connected to the terminal device. Therefore, the server can obtain a request for video processing sent by the terminal device based on the trigger operation by the user. Camera movement processing is performed on the video to be processed based on the request for video processing to obtain a target video.

In this embodiment, the user may trigger an editing operation on the terminal device based on the collected video to be processed. In response to the editing operation, the associated content of the video to be processed and the predetermined camera movement processing control may be displayed in the video editing interface. In some embodiments, the video to be processed may be captured in real time by the user, or may be uploaded by the user in a predetermined data storage path, which is not limited in the present disclosure.

Alternatively, the associated content of the video to be processed includes a video track corresponding to the video to be processed and any video frame. Each video frame corresponding to the video to be processed may be included in the video track. The user may determine a currently displayed video frame by performing a selection operation on the video frame in the video track.

In various embodiments of the present disclosure, collection and use of object processing information both obtain user authorization and comply with the relevant regulations. In addition, in the collection and use of the object processing information, personal information of a user is not collected or is processed in a manner that does not reveal an identity of the user.

Step 102: in response to a trigger operation by a user based on the camera movement processing control, at least one target camera movement template generated by the user is determined, and the target camera movement template comprises a motion parameter associated with a camera movement operation.

In this embodiment, after displaying the camera movement processing control in the video editing interface, the user may implement the camera movement processing operation on the video to be processed based on the trigger operation on the camera movement processing control, so that the generated target video can present the camera movement effect.

Alternatively, in response to a trigger operation by a user on the camera movement processing control, at least one target camera movement template generated by the user may be determined, and the target camera movement template comprises a motion parameter associated with a camera movement operation. In some embodiments, the motion parameter includes, but is not limited to, one or more of a trajectory type parameter, a motion duration parameter, a motion mode parameter, and a motion dimension parameter.

It should be noted that the trajectory type parameter represents a single movement track of a basic camera movement at spatial positions A->B, including a forward trajectory and a backward trajectory: a forward trajectory represents a motion trajectory of the spatial positions A->B; and a backward trajectory represents a motion trajectory of the spatial positions B->A. The motion duration parameter represents a processing duration related to the basic camera movement, including a period duration, a cycle duration, and the like: the period duration represents the time for a single camera movement for the basic camera movement. The cycle duration represents the overall time for performing a single camera movement in a cycle manner. The motion mode parameter represents a moving form of the forward trajectory/backward trajectory, including four types, i.e., jump cutting, speed constant, speed changing, and randomness: the jump cutting simulates an effect of instantaneous cutting; the speed constant simulates an effect of speed constant of the camera movement; the speed changing simulates an effect of acceleration and deceleration of the camera movement; the randomness simulates an effect of instability and shaking. The motion dimension parameter represents a motion dimension type of the basic camera movement, including 4 types, i.e., translation, following, rotation, and scaling: the translation affects values of trasition (cx, cy) of a picture; the following obtains center and scale information of a specified subject, thereby affecting rotation of the values of trasition (cx, cy) of the picture; the rotation changes a value of rotation of the picture; the scaling implements a value of scaling of the picture.

In some embodiments, in response to a trigger operation by the user on the camera movement processing control, a plurality of camera movement type controls may be displayed in the video editing interface. Based on a trigger operation by the user on any camera movement type control, a plurality of camera movement templates corresponding to the camera movement type control are determined as at least one target camera movement template. Alternatively, in response to the trigger operation by the user on the camera movement processing control, the plurality of camera movement templates may be displayed in the video editing interface. In response to a selection operation triggered by the user, the at least one camera movement template selected by the user is determined as the at least one target camera movement template.

Step 103: based on the at least one target camera movement template, video processing is performed on the video to be processed to obtain a target video.

In this embodiment, after the at least one target camera movement template is determined, video processing may be performed automatically on the video to be processed based on the at least one target camera movement template to obtain the target video.

For example, in the target camera movement template, it may be defined that a trajectory type is a forward trajectory, a motion mode is motion at a constant speed, and a motion dimension is a translation motion. Therefore, video processing may be performed on any key frame through the target camera movement template, to present a camera movement effect.

According to the method of video processing provided in this embodiment, by displaying a content associated with a video to be processed and a predetermined camera movement processing control in a video editing interface, the user can quickly determine at least one target camera movement template associated with the video to be processed based on the camera movement processing control. Therefore, the video processing operation can be performed on the video to be processed based on the at least one target camera movement template, so as to achieve the camera movement effect. The user does not need to manually control the operations such as movement, pause, rotation and the like of the camera in the capturing process. The difficulty of camera movement processing is reduced, and displayed contents and interaction modes within the video editing interface are enriched.

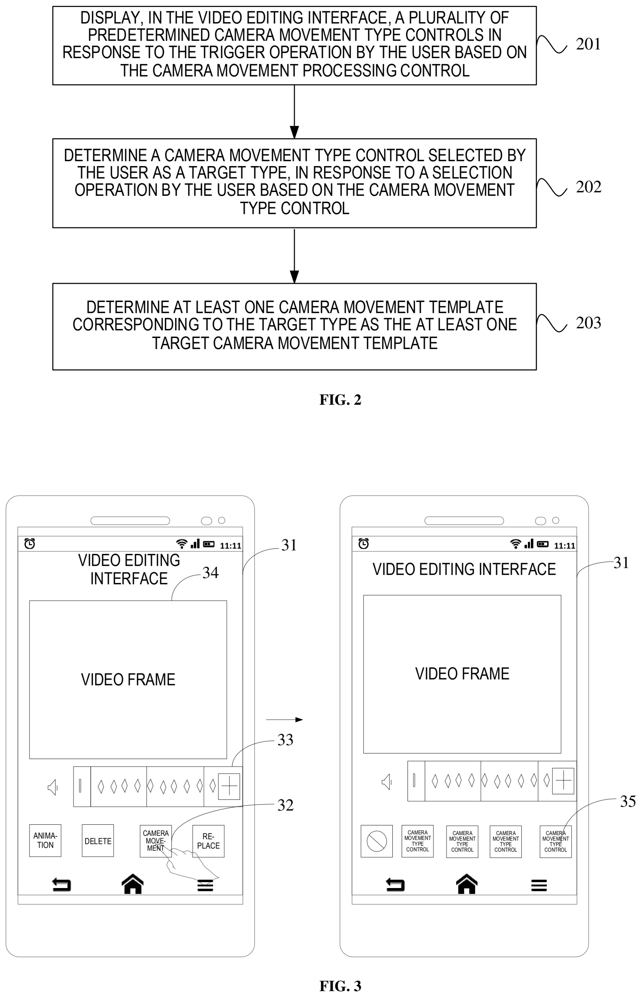

FIG. 2 is a schematic flowchart of a method of video processing provided by another embodiment of the present disclosure.

Step 201: in the video editing interface, a plurality of predetermined camera movement type controls are displayed in response to the trigger operation by the user based on the camera movement processing control.

Step 202: a camera movement type control selected by the user is determined as a target type, in response to a selection operation by the user based on the camera movement type control.

Step 203: at least one camera movement template corresponding to the target type is determined as the at least one target camera movement template.

In this embodiment, in order to implement camera movement for a video, a plurality of different camera movement types may be set in advance, where the camera movement types include, but are not limited to, a dynamic type, a soft type, a scaling type, a shake type, and the like. Each camera movement type corresponds to a plurality of camera movement templates, and the camera movement template may include a camera movement parameter.

Therefore, in order to quickly implement the determination of the at least one target camera movement template, in response to a trigger operation by the user based on the camera movement processing control, a predetermined plurality of camera movement type controls may be displayed in the video editing interface, where the camera movement type controls are in a one-to-one correspondence with the camera movement types. The user may perform a selection operation between a plurality of camera movement type controls based on actual requirements. In response to the selection operation by the user based on the camera movement type control, the camera movement type control selected by the user is determined as the target type. At least one camera movement template corresponding to the target type is determined as at least one target camera movement template.

FIG. 3 is a schematic diagram of interface interaction provided by an embodiment of the present disclosure. As shown in FIG. 3, a content associated with a video to be processed and a predetermined camera movement processing control 32 may be displayed in a video editing interface 31, where the associated content comprises a video track 33 corresponding to the video to be processed and any video frame 34. In response to a trigger operation by the user on the camera movement processing control 32, the predetermined plurality of camera movement type controls 35 may be displayed in the video editing interface 31. The user may perform selection operation on the camera movement type control 35 based on actual requirements. Therefore, the video processing operation can be performed on the video to be processed based on the at least one target camera movement template corresponding to the target type, so as to achieve the camera movement effect in the captured video to be processed.

According to the method of video processing provided in this embodiment, a plurality of different camera movement type controls are set in advance, so that the user can select a target type based on actual requirements. Camera movement processing is performed based on at least one target camera movement template corresponding to the target type, to obtain a target video with a camera movement effect, and improve video quality.

Further, on the basis of any one of the foregoing embodiments, after step 203, the following is further included: displaying a predetermined adjustment control in response to a trigger operation by the user on the camera movement type control; determining a target adjustment parameter generated by the user, in response to a regulation operation triggered by the user based on the adjustment control; and performing, based on the target adjustment parameter, an adjusting operation on the at least one camera movement template corresponding to the target type to obtain the at least one target camera movement template.

In this embodiment, in order to make the at least one target camera movement template for video processing more fitting with the personalized requirement of the user, a predetermined adjustment control may be displayed after the user selects the camera movement type control and performs a re-trigger operation on the current selected camera movement type control, so that the user can perform an adjusting operation on the camera movement type based on the adjustment control.

Alternatively, the target adjustment parameter generated by the user is determined in response to the regulation operation triggered by the user based on the adjustment control. An adjusting operation is performed on the at least one camera movement template corresponding to the target type based on the target adjustment parameter to obtain at least one target camera movement template, so that the at least one adjusted target camera movement template is more fitting with the target adjustment parameter.

As an implementable approach, the user may adjust a scaling adjustment parameter, a rotation adjustment parameter, and a movement adjustment parameter based on the adjustment control. For example, if the user adjusts the rotation adjustment parameter to be higher, more camera movement templates related to rotation may be reserved in the at least one camera movement template corresponding to the target type, so as to achieve a rotating camera movement effect.

According to the method of video processing provided in this embodiment, the adjustment control is displayed in response to the re-trigger operation by the user on the camera movement type control, so that the user can determine the adjustment parameter based on the adjustment control. Therefore, the at least one target camera movement template corresponding to the target type is more in line with the personalized requirement of the user, and the user experience is improved.

Further, on the basis of any one of the above embodiments, the adjustment control includes a regulation slider corresponding to at least one adjustment parameter, and the adjustment parameter includes at least one of a scaling adjustment parameter, a rotation adjustment parameter, or a movement adjustment parameter.

Determining the target adjustment parameter generated by the user in response to the regulation operation triggered by the user based on the adjustment control comprises: obtaining at least one adjustment parameter determined by the user, in response to a sliding operation by the user on the at least one regulation slider, and determining the at least one adjustment parameter as the target adjustment parameter.

In this embodiment, the adjustment control may include a regulation slider corresponding to the at least one adjustment parameter. The user may quickly achieve the determination of the target adjustment parameter by dragging and moving the regulation slider. In some embodiments, the adjustment parameter includes at least one of a scaling adjustment parameter, a rotation adjustment parameter, or a movement adjustment parameter.

After the regulation slider corresponding to the at least one adjustment parameter is displayed, the at least one adjustment parameter determined by the user is obtained in response to the sliding operation by the user for the at least one regulation slider, and the at least one adjustment parameter is determined as the target adjustment parameter.

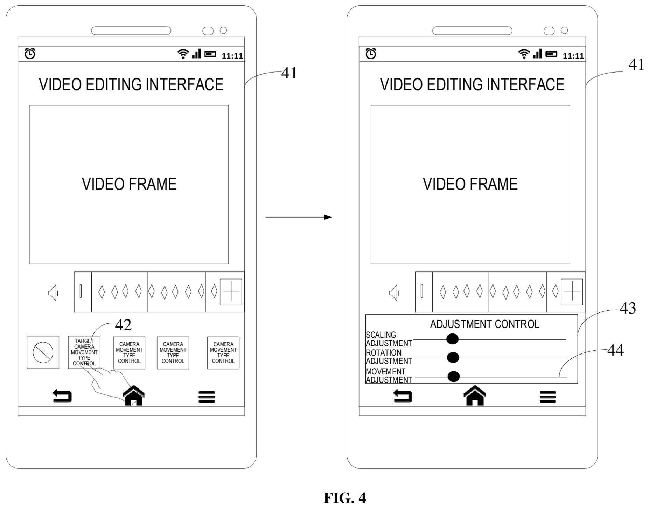

FIG. 4 is a schematic diagram of another interface interaction provided by an embodiment of the present disclosure. As shown in FIG. 4, after the user determines, in the video editing interface 41, a target type based on the camera movement type control 42, a predetermined adjustment control 43 may be displayed in response to a re-trigger operation by the user on the camera movement type control 42, where the adjustment control 43 includes a regulation slider 44 corresponding to at least one adjustment parameter, and the adjustment parameter includes at least one of a scaling adjustment parameter, a rotation adjustment parameter, or a movement adjustment parameter. The user may determine at least one adjustment parameter based on the sliding operation on the regulation slider 44 and further adjust the at least one target camera movement template based on the at least one adjustment parameter.

According to the method of video processing provided by the embodiment, at least one regulation slider is displayed in the video editing interface based on a re-trigger operation by the user on the camera-movement-type control, so that the user can quickly realize the determination of the adjustment parameters based on the at least one regulation slider, and the displayed contents and the interaction modes within the video editing interface are enriched.

Further, on the basis of any one of the above embodiments, step 201 includes: displaying, in the video editing interface, a first camera movement type control and a second camera movement type control in response to the trigger operation by the user based on the camera movement processing control. A plurality of predetermined camera movement type controls is displayed in the video editing interface in response to a trigger operation by the user on the first camera movement control.

In this embodiment, the first camera movement control and the second camera movement control are displayed in the video editing interface in response to a trigger operation by the user based on the camera movement processing control.

Taking a practical application as an example, the first camera movement control may be an intelligent camera movement control based on the intelligent camera movement control being able to intelligently determine, based on the target type selected by the user, at least one target camera movement template with a higher degree of fitting with the video to be processed. The second camera movement control may be a lock control, and a certain body part of the user may be locked based on the lock control, and camera movement processing is performed based on the locked body part to achieve the camera movement effect.

Alternatively, after the first camera movement control and the second camera movement control are displayed respectively, a plurality of predetermined camera movement type controls are displayed in the video editing interface in response to a trigger operation by the user on the first camera movement control.

Further, on the basis of any one of the foregoing embodiments, after step 103, the following is further included: displaying, in the video editing interface, a first camera movement control and a second camera movement control in response to the trigger operation by the user based on the camera movement processing control; and displaying, in the video editing interface, a predetermined first prompt control in response to a trigger operation by the user on the second camera movement control, the first prompt control being configured to prompt the user that a camera movement effect corresponding to the first camera movement control and a camera movement effect corresponding to the second camera movement control are mutually exclusive.

In this embodiment, after processing, based on the at least one target camera movement template determined by triggering the first camera movement control, the video to be processed to obtain the target video, the user may perform a re-trigger operation on the camera movement processing control.

Alternatively, in response to the trigger operation by the user based on the camera movement processing control, the first camera movement control and the second camera movement control may be displayed in the video editing interface. In response to the trigger operation by the user on the second camera movement control, a predetermined first prompt control is displayed in the video editing interface, and the first prompt control is configured to prompt the user that a camera movement effect corresponding to the first camera movement control and a camera movement effect corresponding to the second camera movement control are mutually exclusive.

Alternatively, after processing, through the at least one target camera movement template, the video to be processed to obtain the target video, the body part in the target video is locked again, which may affect the video processing effect of the previous step. Therefore, in response to a trigger operation by the user on the second camera movement control, a predetermined first prompt control is displayed in the video editing interface, and prompt information may be displayed in the first prompt control. For example, the prompt information may be: the intelligent camera movement and the body lock cannot be used at the same time, please determine whether to replace. In addition, the first prompt control may further include a selection control, so that the user determines whether to switch between the camera movement modes based on the selection control and the prompt information.

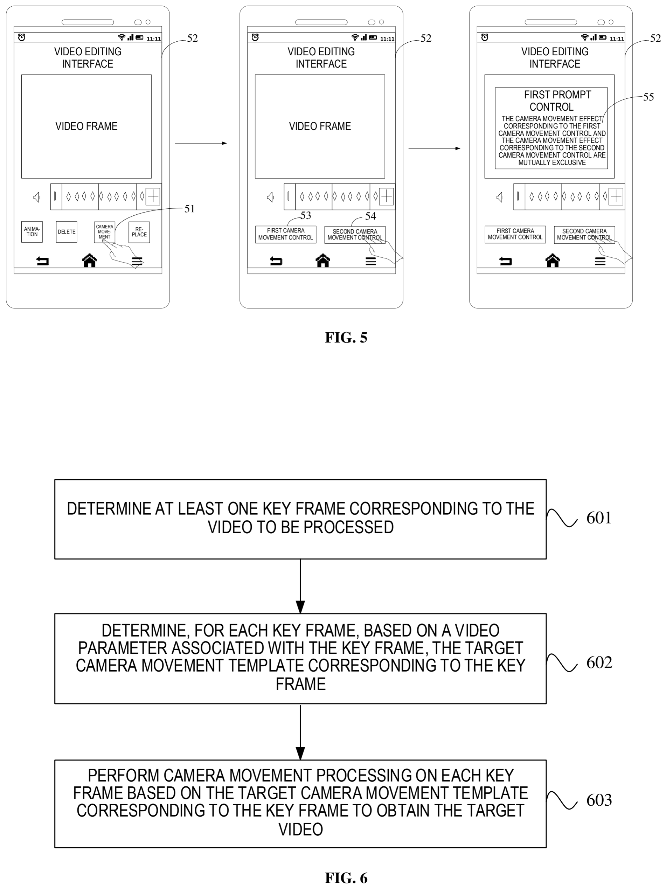

FIG. 5 is a schematic diagram of still another interface interaction provided by an embodiment of the present disclosure. As shown in FIG. 5, after processing, based on the at least one target camera movement template, the video to be processed to obtain the target video, the first camera movement control 53 and the second camera movement control 54 may be displayed in the video editing interface 52 in response to the re-trigger operation by the user on the camera movement processing control 51. In response to a trigger operation by the user on the second camera movement control 54, the predetermined first prompt control 55 is displayed in the video editing interface 52. The first prompt control 55 is configured to prompt the user that a camera movement effect corresponding to the first camera movement control and a camera movement effect corresponding to the second camera movement control are mutually exclusive.

According to the method of video processing provided in this embodiment, after processing, based on the at least one target camera movement template, the video to be processed to obtain the target video, the first camera movement control and the second camera movement control are displayed in response to the re-trigger operation by the user on the camera movement processing control. In response to the trigger operation by the user on the second camera movement control, the predetermined first prompt control is displayed in the video editing interface, so that the user can know the effect of the current trigger operation in time based on the first prompt control, so that the finally generated target video is more fitting with the personalized requirement of the user.

FIG. 6 is a schematic flowchart of a method of video processing provided by still another embodiment of the present disclosure. On the basis of any embodiment above, as shown in FIG. 6, the step 103 includes the following step: step 601, step 602 and step 603.

Step 601: at least one key frame corresponding to the video to be processed is determined.

Step 602: for each key frame, based on a video parameter associated with the key frame, the target camera movement template corresponding to the key frame is determined, where the video parameter includes at least one of an action parameter, a music beat parameter, an original camera movement parameter, or a transition parameter.

Step 603: camera movement processing is performed on each key frame based on the target camera movement template corresponding to the key frame to obtain the target video.

In this embodiment, the video to be processed may correspond to at least one key frame. In order to implement the camera movement processing on the video to be processed, the at least one key frame may be processed by using at least one target camera movement template.

Alternatively, at least one key frame corresponding to the video to be processed may be determined. The key frame may be a video frame corresponding to a highlight action, a video frame corresponding to a highlight music beat or a video frame corresponding to a scene change. The key frame may be determined in any manner, which is not limited in the present disclosure.

Further, the video parameter associated with each key frame may be identified, where the video parameter includes at least one of an action parameter, a music beat parameter, an original camera movement parameter, or a transition parameter. The video parameter associated with the key frame may parameters of a plurality of video frames including the key frame within a predetermined time range or a predetermined number of video frames including the key frame. The action parameter may be sequence information of the action highlight points, and the music beat parameter may be sequence information of the music highlight points. The original camera movement parameter may be a camera motion parameter used in the video to be processed. The transition parameter may be contents such as a transition time point and a segment duration.

After obtaining the video parameters associated with each key frame, in order to improve the processing effect of the camera movement processing, so that the target camera movement template is more fitting with the video content, for each key frame, the target camera movement template corresponding to the key frame is determined based on the video parameters associated with the key frame. Camera movement processing is performed on each key frame based on the target camera movement template corresponding to the key frame to obtain a target video.

According to the method of video processing provided in this embodiment, at least one key frame corresponding to the video to be processed is determined, and the target camera movement template corresponding to each key frame is determined. The camera movement processing is performed on each key frame based on the target camera movement template corresponding to the key frame to obtain the target video. Therefore, the user does not need to perform camera movement operation during capturing, that is, the camera movement effect matching with parameters such as music and action parameters of the target video can be presented in the target video.

Further, on the basis of any one of the above embodiments, the video editing interface includes a background music recognition control.

After step 102, the following is further included: performing a recognition operation on a beat of background music corresponding to the video to be processed, in response to a trigger operation by the user on the background music recognition control, to obtain beat information corresponding to the video to be processed; displaying a beat regulation control in the video editing interface, where the beat regulation control is configured to adjust a speed of the beat information; and performing an adjustment operation on at least one key frame corresponding to the video to be processed, in response to a beat regulation parameter generated by the user based on the beat regulation control.

In this embodiment, in the camera movement process, in order to make the camera movement effect more fitting with the video content, the key frame may be determined based on the background music of the video to be processed.

Alternatively, the video editing interface includes a background music recognition control. In response to the trigger operation by the user on the background music recognition control, a recognition operation may be performed on the beat of the background music corresponding to the video to be processed to obtain the beat information corresponding to the video to be processed. The beat regulation control is displayed in the video editing interface, where the beat regulation control is configured to adjust the speed of the beat information. A beat speed regulation slider may be displayed in the beat regulation control. The user may adjust the speed of the beat information by a regulation operation on the beat speed regulation slider. Alternatively, the beat regulation control may include selection controls corresponding to different speeds. The user can adjust the speed of the beat information by a trigger operation on the selection control. This is not limited in the present disclosure.

An adjustment operation is performed on at least one key frame corresponding to the video to be processed, in response to a beat regulation parameter generated by the user based on the beat regulation control. For example, if the user accelerates the beat information, the adjusted background music rhythm is relatively compact. In order to cause the camera movement effect more fitting with the background music, the key frame may be added. Therefore, the camera movement effect can be increased in the video to be processed.

According to the method of video processing provided by the embodiment, the key frame is correspondingly adjusted based on the adjustment operation by the user on the background music beat information, so that the camera movement effect is more fitting with the adjusted background music of the video to be processed, and the quality of the target video is improved.

Further, on the basis of any one of the foregoing embodiments, after step 103, the following is further included: displaying a predetermined adjustment control in response to a trigger operation by the user on the camera movement type control; displaying, in the video editing interface, a predetermined second prompt control in response to an regulation operation triggered by the user based on the adjustment control, the second prompt control being configured to prompt that the regulation operation is to change a processing effect of performing the video processing on the video to be processed based on the at least one target camera movement template.

In this embodiment, after the video to be processed is processed based on the at least one target camera movement template to obtain the target video, the predetermined adjustment control may be displayed in response to the re-trigger operation by the user on the camera movement type control. The adjustment control is configured to perform adjustment operation on at least one of the scaling adjustment parameter, the rotation adjustment parameter, or the movement adjustment parameter.

After the user adjusts at least one of the scaling adjustment parameter, the rotation adjustment parameter, or the movement adjustment parameter, the current target camera movement template may not match the current key frame and the adjustment parameter currently determined by the user. Therefore, in response to the adjustment operation triggered by the user based on the adjustment control, a predetermined second prompt control is displayed in the video editing interface. The second prompt control is configured to prompt that the regulation operation is to change a processing effect of performing the video processing on the video to be processed based on the at least one target camera movement template.

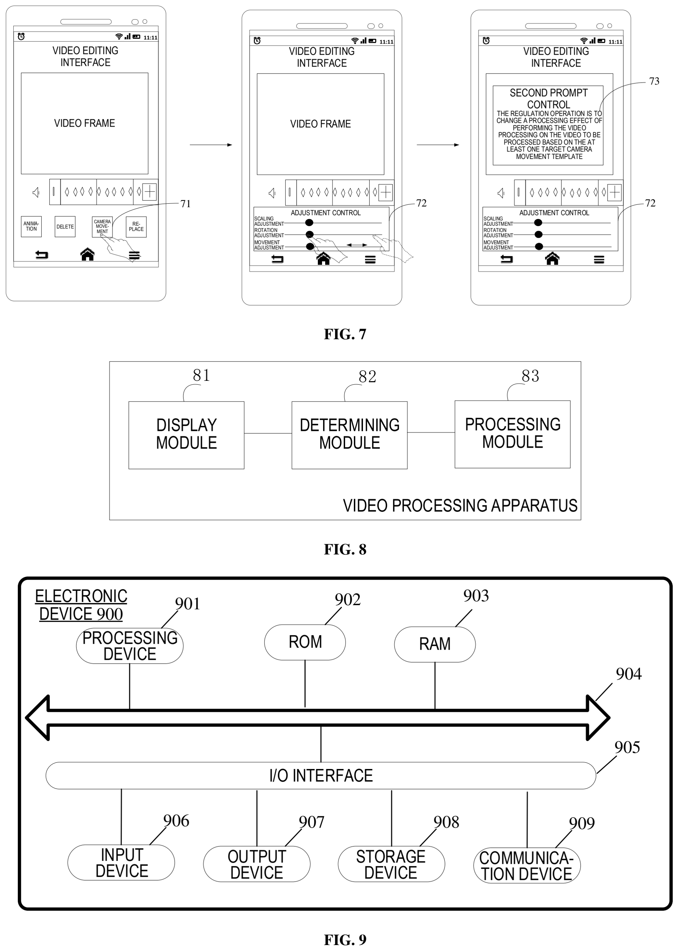

FIG. 7 is a schematic diagram of yet another interface interaction provided by an embodiment of the present disclosure. As shown in FIG. 7, after the video to be processed is processed based on the at least one target camera movement template to obtain the target video, a predetermined adjustment control 72 is displayed in response to a trigger operation by the user on the camera movement type control 71. In response to the adjustment operation triggered by the user based on the adjustment control 72, a predetermined second prompt control 73 may be displayed in the video editing interface. The second prompt control 73 is configured to prompt that the regulation operation is to change a processing effect of performing the video processing on the video to be processed based on the at least one target camera movement template.

According to the method of video processing provided in this embodiment, after the video to be processed is processed based on the at least one target camera movement template to obtain the target video, a predetermined adjustment control is displayed in response to a trigger operation by the user on the camera movement type control. In response to the adjustment operation triggered by the user based on the adjustment control, the predetermined second prompt control may be displayed in the video editing interface, so that the user can know the result of the current adjustment operation in time, to cause the finally generated target video more fitting with the personalized requirement of the user.

Further, on the basis of any one of the above embodiments, the method further comprises: displaying, in the video editing interface, in response to an addition operation triggered by the user, the content associated with the video to be processed and a content associated with the picture-in-picture video determined by the user, respectively; determining a video selected by the user as a current target video, in response to a selection operation triggered by the user on the picture-in-picture video; determining at least one camera movement template corresponding to the target video generated by the user, in response to a trigger operation by the user on the camera movement processing control; and performing, based on the at least one camera movement template, video processing on the target video.

In this embodiment, in the video editing process, the user may further add a picture-in-picture into the video to be processed to optimize the video effect. In response to an addition operation triggered by the user, the content associated with the video to be processed and a content associated with the picture-in-picture video determined by the user are displayed in the video editing interface, respectively. In some embodiments, the associated content includes any video frame and a video track.

Further, the user may select the currently edited video track by performing a trigger operation on the video track of the video to be processed or the video track of the picture-in-picture video. In response to a selection operation triggered by the user on the picture-in-picture video, the video selected by the user is determined as the current target video.

Further, when the user selects the picture-in-picture video as the target video, the user may further determine at least one camera movement template based on the actual requirement, and perform camera movement processing on the picture-in-picture video based on the at least one camera movement template. In response to a trigger operation by the user on the camera movement processing control, at least one camera movement template corresponding to the target video generated by the user is determined. Video processing is performed on the target video based on the at least one camera movement template.

In some embodiments, a manner of performing, based on the at least one camera movement template, camera movement processing on the picture-in-picture video is consistent with a manner of performing, based on the at least one camera movement template, camera movement processing on the target video, and details thereof are not described herein again.

According to the method of video processing provided in this embodiment, after the picture-in-picture video is added, at least one camera movement template corresponding to the target video generated by the user is determined based on a trigger operation by the user on the camera movement processing control. Video processing is performed on the target video based on the at least one camera movement template, so that the camera movement processing on the picture-in-picture video can be implemented, and the video quality is improved.

FIG. 8 is a schematic structural diagram of an apparatus for video processing provided by an embodiment of the present disclosure. As shown in FIG. 8, the apparatus includes a display module 81, a determining module 82, and a processing module 83. In some embodiments, the display module 81 is configured to display, in a video editing interface, a content associated with a video to be processed and a predetermined camera movement processing control, where the associated content comprises a video track corresponding to the video to be processed, and any video frame. The determining module 82 is configured to determine at least one target camera movement template generated by a user, in response to a trigger operation by the user based on the camera movement processing control, the target camera movement template comprising a motion parameter associated with a camera movement operation. The processing module 83 is configured to perform, based on the at least one target camera movement template, video processing on the video to be processed to obtain a target video.

Further, on the basis of any one of the above embodiments, the determining module is configured to: display, in the video editing interface, a plurality of predetermined camera movement type controls in response to the trigger operation by the user based on the camera movement processing control; determine a camera movement type control selected by the user as a target type, in response to a selection operation by the user based on the camera movement type control; and determine at least one camera movement template corresponding to the target type as the at least one target camera movement template.

Further, on the basis of any one of the above embodiments, the determining module is further configured to: display a predetermined adjustment control in response to a trigger operation by the user on the camera movement type control; determine a target adjustment parameter generated by the user, in response to a regulation operation triggered by the user based on the adjustment control; and perform, based on the target adjustment parameter, an adjusting operation on the at least one camera movement template corresponding to the target type to obtain the at least one target camera movement template.

Further, on the basis of any one of the above embodiments, the adjustment control comprises at least one regulation slider corresponding to at least one adjustment parameter, the adjustment parameter comprising at least one of a scaling adjustment parameter, a rotation adjustment parameter, or a movement adjustment parameter. The determining module is configured to: obtain at least one adjustment parameter determined by the user, in response to a sliding operation by the user on the at least one regulation slider, and determine the at least one adjustment parameter as the target adjustment parameter.

Further, on the basis of any one of the above embodiments, the determining module is configured to: display, in the video editing interface, a first camera movement control and a second camera movement control in response to the trigger operation by the user based on the camera movement processing control; and display, in the video editing interface, the plurality of predetermined camera movement type controls in response to a trigger operation by the user on the first camera movement control.

Further, on the basis of any one of the above embodiments, the apparatus further includes: a display module configured to display, in the video editing interface, a first camera movement control and a second camera movement control in response to the trigger operation by the user based on the camera movement processing control; and a prompt control configured to display, in the video editing interface, a predetermined first prompt control in response to a trigger operation by the user on the second camera movement control, the first prompt control being configured to prompt the user that a camera movement effect corresponding to the first camera movement control and a camera movement effect corresponding to the second camera movement control are mutually exclusive.

Further, on the basis of any one of the above embodiments, the processing module is configured to: determine at least one key frame corresponding to the video to be processed; determine, for each key frame, based on a video parameter associated with the key frame, the target camera movement template corresponding to the key frame, where the video parameter comprises at least one of an action parameter, a music beat parameter, an original camera movement parameter, or a transition parameter; and perform camera movement processing on each key frame based on the target camera movement template corresponding to the key frame to obtain the target video.

Further, on the basis of any one of the above embodiments, the video editing interface comprises a background music recognition control. The processing module is further configured to: perform a recognition operation on a beat of background music corresponding to the video to be processed, in response to a trigger operation by the user on the background music recognition control, to obtain beat information corresponding to the video to be processed; display a beat regulation control in the video editing interface, the beat regulation control is configured to adjust a speed of the beat information; and perform an adjustment operation on at least one key frame corresponding to the video to be processed, in response to a beat regulation parameter generated by the user based on the beat regulation control.

Further, on the basis of any one of the above embodiments, the apparatus further includes: a display module configured to: display a predetermined adjustment control in response to a trigger operation by the user on the camera movement type control; and display, in the video editing interface, a predetermined second prompt control in response to an regulation operation triggered by the user based on the adjustment control, the second prompt control being configured to prompt that the regulation operation is to change a processing effect of performing the video processing on the video to be processed based on the at least one target camera movement template.

Further, on the basis of any one of the foregoing embodiments, the apparatus further includes: a display module configured to display, in the video editing interface, in response to an addition operation triggered by the user, the content associated with the video to be processed and a content associated with the picture-in-picture video determined by the user, respectively. The determining module is configured to determine a video selected by the user as a current target video, in response to a selection operation triggered by the user on the picture-in-picture video. The determining module is configured to determine at least one camera movement template corresponding to the target video generated by the user, in response to a trigger operation by the user on the camera movement processing control. The processing module is configured to perform, based on the at least one camera movement template, video processing on the target video.

The device provided in this embodiment can be configured to perform the technical solutions of the foregoing method embodiments. And the implementation principles and technical effects thereof are similar, and details are not described herein again in this embodiment.

In order to implement the foregoing embodiments, an embodiment of the present disclosure further provides an electronic device, comprising: a processor and a memory; the memory storing computer executable instructions. The processor executes the computer executable instructions stored by the memory, to cause the processor to perform the method of video processing of any of the embodiments above.

FIG. 9 is a schematic diagram of a structure of an electronic device provided by an embodiment of the present disclosure. As shown in FIG. 9, the electronic device 900 may be a terminal device or a server. In some embodiments, the terminal device may include, but is not limited to, a mobile terminal such as a mobile phone, a notebook computer, a digital broadcast receiver, a Personal Digital Assistant (PDA), a Portable Android Device (PAD), a Portable Media Player (PMP), an in-vehicle terminal (for example, an in-vehicle navigation terminal), and a fixed terminal such as a digital TV, a desktop computer, or the like. The electronic device shown in FIG. 9 is merely an example, and should not impose any limitation on the functions and scope of use of the embodiments of the present disclosure.

As shown in FIG. 9, the electronic device 900 may comprise a processing device (for example, a central processor, a graphics processor, etc.) 901, which may perform various appropriate actions and processing based on a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input/output (I/O) interface 905 is also connected to bus 904.

Generally, the following devices may be connected to the I/O interface 905: an input device 906 comprising, for example, a touch screen, a touch pad, a keyboard, a mouse, a camera, a microphone, an accelerometer, a gyroscope, etc.; an output device 907 comprising, for example, a Liquid Crystal Display (LCD), a speaker, a vibrator, etc.; a storage device 908 comprising, for example, a magnetic tape, a hard disk, etc.; and a communication device 909. The communication device 909 may allow the electronic device 900 to communicate wirelessly or wired with other devices to exchange data. While FIG. 9 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure comprise a computer program product comprising a computer program embodied on a computer readable medium, the computer program containing program code for performing the method shown in the flowchart. In such embodiments, the computer program may be downloaded and installed from the network through the communication device 909, or installed from the storage device 908, or installed from the ROM 902. When the computer program is executed by the processing device 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or means, or any combination thereof. More specific examples of computer-readable storage media may include, but are not limited to, an electrical connection having one or more wires, a portable computer magnetic disk, a hard disk, a random access memory (RAM), a read-only memory (ROM), an erasable programmable read-only memory (EPROM or Flash memory), an optical fiber, a portable compact disc read-only memory (CD-ROM), an optical storage means, a magnetic storage means, or any suitable combination of the foregoing. In the present disclosure, a computer-readable storage medium may be any tangible medium containing or storing a program that may be used by or in connection with an instruction execution system, apparatus, or means. In the present disclosure, a computer readable signal medium may comprise a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or means. The program code contained in the computer-readable medium may be transmitted with any suitable medium, including, but not limited to: wires, optical cables, RF (radio frequency), and the like, or any suitable combination of the foregoing.

In order to implement the foregoing embodiments, an embodiment of the present disclosure further provides a computer-readable storage medium. The computer-readable storage medium stores computer-executable instructions, when executed by a processor, implementing the method of video processing of any of the embodiments above.

In order to implement the foregoing embodiments, an embodiment of the present disclosure further provides a computer program product, comprising a computer program, the computing program, when executed by a processor, implementing the method of video processing of any of the embodiments above.

The computer-readable medium described above may be comprised in the above electronic device; or may be separately present without being assembled into the electronic device.

The computer-readable medium carries one or more programs, and when the one or more programs are executed by the electronic device, causing the electronic device to perform the method shown in the foregoing embodiments.

Computer program code for performing the operations of the present disclosure may be written in one or more programming languages, comprising object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer is involved, the remote computer may be connected to the user computer or may be connected to an external computer (for example, using an Internet service provider for Internet connection) through any kind of network, comprising a local area network (LAN) or a wide area network (WAN).

The flowcharts and block diagrams in the figures illustrate system architecture, functionality, and operation of systems, methods, and computer program products that can be implemented according to various embodiments of the present disclosure. In this regard, each block in the flowchart or block diagram may represent a module, program segment, or portion of code that contains one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented with a combination of dedicated hardware and computer instructions.

The units involved in the embodiments of the present disclosure may be implemented in software, or may be implemented in hardware. In some embodiments, the name of the unit does not constitute a limitation on the unit itself, for example, the first obtaining unit may be further described as "the unit that obtaining at least two Internet Protocol addresses".

The functions described above may be performed, at least in part, by one or more hardware logic components. For example, without limitation, example types of hardware logic components that may be used comprise: field programmable gate arrays (FPGAs), application specific integrated circuits (ASICs), application specific standard products (ASSPs), system on chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may comprise, but is not limited to, electronic, magnetic, optical, electromagnetic, infrared, or semiconductor systems, apparatus, or devices, or any suitable combination of the foregoing. More specific examples of machine-readable storage media may comprise electrical connection having one or more wires, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage means, a magnetic storage means, or any suitable combination of the foregoing.

The above description is merely an illustration of the preferred embodiments of the present disclosure and the principles of the application. It should be understood by those skilled in the art that the disclosure scope involved in the disclosure in the present disclosure is not limited to the technical solutions of the specific combination of the above technical features, and should also cover other technical solutions formed by any combination of the above technical features or their equivalent features without departing from the above disclosed concept. For example, the technical solutions formed by above features mutually replacing technical features disclosed in the present disclosure (but not limited to) which have similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are comprised in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method of video processing, comprising:
displaying, in a video editing interface, a content associated with a video to be processed and a predetermined camera movement processing control, wherein the associated content comprises a video track corresponding to the video to be processed, and any video frame;
determining at least one target camera movement template generated by a user, in response to a trigger operation by the user based on the camera movement processing control, the target camera movement template comprising a motion parameter associated with a camera movement operation; and
performing, based on the at least one target camera movement template, video processing on the video to be processed to obtain a target video.

2. The method of claim 1, wherein determining the target camera movement template generated by the user, in response to the trigger operation by the user based on the camera movement processing control comprises:
displaying, in the video editing interface, a plurality of predetermined camera movement type controls in response to the trigger operation by the user based on the camera movement processing control;
determining a camera movement type control selected by the user as a target type, in response to a selection operation by the user based on the camera movement type control; and
determining at least one camera movement template corresponding to the target type as the at least one target camera movement template.

3. The method of claim 2, wherein after determining the camera movement type control selected by the user as the target type, in response to the selection operation by the user based on the camera movement type control, the method further comprises:
displaying a predetermined adjustment control in response to a trigger operation by the user on the camera movement type control;
determining a target adjustment parameter generated by the user, in response to a regulation operation triggered by the user based on the adjustment control; and
performing, based on the target adjustment parameter, an adjusting operation on the at least one camera movement template corresponding to the target type to obtain the at least one target camera movement template.

4. The method of claim 3, wherein the adjustment control comprises at least one regulation slider corresponding to at least one adjustment parameter, the adjustment parameter comprising at least one of a scaling adjustment parameter, a rotation adjustment parameter, or a movement adjustment parameter; and
determining the target adjustment parameter generated by the user, in response to the regulation operation triggered by the user based on the adjustment control comprises:
obtaining at least one adjustment parameter determined by the user, in response to a sliding operation by the user on the at least one regulation slider, and determining the at least one adjustment parameter as the target adjustment parameter.

5. The method of claim 2, wherein displaying, in the video editing interface, the plurality of predetermined camera movement type controls in response to the trigger operation by the user based on the camera movement processing control comprises:
displaying, in the video editing interface, a first camera movement control and a second camera movement control in response to the trigger operation by the user based on the camera movement processing control; and
displaying, in the video editing interface, the plurality of predetermined camera movement type controls in response to a trigger operation by the user on the first camera movement control.

6. The method of claim 1, wherein after performing, based on the at least one target camera movement template, the video processing on the video to be processed to obtain the target video, the method further comprises:
displaying, in the video editing interface, a first camera movement control and a second camera movement control in response to the trigger operation by the user based on the camera movement processing control; and
displaying, in the video editing interface, a predetermined first prompt control in response to a trigger operation by the user on the second camera movement control, wherein the first prompt control is configured to prompt the user that a camera movement effect corresponding to the first camera movement control and a camera movement effect corresponding to the second camera movement control are mutually exclusive.

7. The method of any of claims 1-6, wherein performing, based on the at least one target camera movement template, the video processing on the video to be processed to obtain the target video comprises:
determining at least one key frame corresponding to the video to be processed;
determining, for each key frame, according to a video parameter associated with the key frame, the target camera movement template corresponding to the key frame, wherein the video parameter comprises at least one of an action parameter, a music beat parameter, an original camera movement parameter, or a transition parameter; and
performing camera movement processing on each key frame according to the target camera movement template corresponding to the key frame to obtain the target video.

8. The method of claim 7, wherein the video editing interface comprises a background music recognition control; and
after determining the at least one target camera movement template generated by the user, in response to the trigger operation by the user based on the camera movement processing control, the method further comprises:
performing a recognition operation on a beat of background music corresponding to the video to be processed, in response to a trigger operation by the user on the background music recognition control, to obtain beat information corresponding to the video to be processed;
displaying a beat regulation control in the video editing interface, wherein the beat regulation control is configured to adjust a speed of the beat information; and
performing an adjustment operation on at least one key frame corresponding to the video to be processed, in response to a beat regulation parameter generated by the user based on the beat regulation control.

9. The method of any of claims 1-6, wherein after performing, based on the at least one target camera movement template, the video processing on the video to be processed to obtain the target video, the method further comprises:
displaying a predetermined adjustment control in response to a trigger operation by the user on the camera movement type control; and
displaying, in the video editing interface, a predetermined second prompt control in response to an regulation operation triggered by the user based on the adjustment control, the second prompt control being configured to prompt that the regulation operation is to change a processing effect of performing the video processing on the video to be processed based on the at least one target camera movement template.

10. The method of any of claims 1-6, further comprising:
displaying, in the video editing interface, in response to an addition operation triggered by the user, the content associated with the video to be processed and a content associated with the picture-in-picture video determined by the user, respectively;
determining a video selected by the user as a current target video, in response to a selection operation triggered by the user on the picture-in-picture video;
determining at least one camera movement template corresponding to the target video generated by the user, in response to a trigger operation by the user on the camera movement processing control; and
performing, based on the at least one camera movement template, video processing on the target video.

11. An apparatus for video processing, comprising:
a display module configured to display, in a video editing interface, a content associated with a video to be processed and a predetermined camera movement processing control, wherein the associated content comprises a video track corresponding to the video to be processed, and any video frame;
a determining module configured to determine at least one target camera movement template generated by a user, in response to a trigger operation by the user based on the camera movement processing control, the target camera movement template comprising a motion parameter associated with a camera movement operation; and
a processing module configured to perform, based on the at least one target camera movement template, video processing on the video to be processed to obtain a target video.

12. An electronic device, comprising: a processor and a memory;
the memory storing computer executable instructions;
the processor executing the computer executable instructions stored by the memory, to cause the processor to perform the method of video processing according to any of claims 1 to 10.

13. A computer readable storage medium storing computer executable instructions, the computer executable instructions, when executed by a processor, implementing the method of video processing according to any of claims 1 to 10.

14. A computer program product, comprising a computer program, the computing program, when executed by a processor, implementing the method of video processing according to any of claims 1 to 10.
